# EUROPÄISCHE PATENTSCHRIFT

(11) **EP 0 629 653 B1**
(45) Veröffentlichungstag und Bekanntmachung des Hinweises auf die Patenterteilung: **20.10.1999**
(21) Anmeldenummer: 94105547.7
(22) Anmeldetag: 11.04.1994
(51) Int. Cl.: C08J 5/12, C08L 23/16, C08K 5/54

(54) **Verfahren zur Herstellung von Verbundgegenständen aus Polyamiden und Elastomeren**
Process for producing composite articles from polyamides and elastomers
Procédé pour la fabrication d'articles composites de polyamides et d'élastomères

(30) Priorität: 09.06.1993 DE 4319142
(43) Veröffentlichungstag der Anmeldung: 21.12.1994
(73) Patentinhaber: Degussa-Hüls Aktiengesellschaft, 60287 Frankfurt am Main (DE)
(72) Erfinder: Jadamus, Hans, Dr., D-45768 Marl (DE); Schmidt, Friedrich Georg, Dr., D-45721 Haltern (DE); Heuer, Horst, D-45721 Haltern (DE)

(56) Entgegenhaltungen:
- EP-A- 0 142 930
- EP-A- 0 344 427
- WO-A-84/03240
- US-A- 3 398 045

## Beschreibung

Die Erfindung betrifft ein Verfahren zur Herstellung von Gegenständen aus mindestens zwei fest miteinander verbundenen Teilstücken aus Vulkanisaten einerseits und Polyamiden, Polyamidformmassen, Polyamidblends oder Faserverbundwerkstoffen mit Polyamidmatrix andererseits. Gegenstand der Erfindung sind auch die nach diesem Verfahren hergestellten Verbundgegenstände.

Die technische Aufgabe, Kautschuke und Thermoplaste fest miteinander zu verbinden, ist alt und bisher auf verschiedene, insgesamt nicht befriedigende Arten gelöst.

Verbundwerkstoffe aus thermoplastisch steifen und gummielastischen Formstoffen werden üblicherweise durch Kleben, Verschrauben, Nieten, mechanisches Verkrallen oder unter Verwendung eines Haftvermittlers zusammengefügt. In neuerer Zeit sind interessante Verfahren zur Herstellung eines Verbundes zwischen Formmassen auf Basis von Polyphenylenethern (PPE) und bestimmten, mit Schwefel bzw. Peroxid vulkanisierbaren Kautschuken entwickelt worden (vgl. EP-A-0 196 407 und EP-A-0 315 749).

Die erzielten Haftfestigkeitswerte sind beachtlich; allerdings ist die Beständigkeit der PPE-Formmassen gegenüber Lösemitteln ebenso noch unbefriedigend wie ihre Stabilität bei Bewitterung. Darüber hinaus können derartige Formmassen wegen ihrer hohen Schmelzeviskosität nur schwierig verarbeitet werden.

Grundsätzlich könnte man daran denken, andere thermoplastische Formmassen bei diesem Verfahren einzusetzen, die bekannterweise diesen Anforderungen besser gerecht werden. Es hatte sich jedoch gezeigt, daß sich beispielsweise mit Polyamiden (PA), die bekanntlich gegenüber Lösemitteln beständig sind, unter den als wesentlich erkannten Verfahrensbedingungen keine ausreichenden Haftungswerte erzielen lassen. Es erschien daher nicht möglich, Verbunde zwischen Polyamiden und Kautschuken herzustellen, die neben einer ausreichenden Haftfestigkeit eine gute Beständigkeit gegenüber Lösemitteln und Bewitterung besitzen.

Eine Lösung dieses Problems wurde in der EP-A-0 344 427 vorgestellt. Dort setzt man einen Thermoplasten ein, der mindestens 30 Gewichtsprozent aliphatische Polyamide enthält. Wesentlich ist, daß die Kautschukzusammensetzung auf einem Kautschuk basiert, der Carboxylgruppen enthält.

Aufbauend darauf werden in der EP-A-0 422 358 Bauteile aus endlosfaserverstärkten Polyamid-Formmassen und Gummi beschrieben. Auch hier ist wesentlich, daß der verwendete Kautschuk mit Carboxyl- oder Anhydridgruppen funktionalisiert ist.

Nach bisherigem Kenntnisstand steht der Hersteller von Kautschuk-Polyamid-Verbunden vor dem Dilemma:
- Entweder er verwendet nach dem RFS-Verfahren (RFS = Resorcin-Formaldehyd-Siliciumdioxid) Harze als Bestandteil der Kautschuk-Compounds, wie von W. Kleemann in "Mischungen für die Elastverarbeitung" beschrieben (VEB Deutscher Verlag für Grundstoffindustrie, Leipzig 1982). Dann ist seine Wahlfreiheit in den Eigenschaften der Elastomeren eingeschränkt, weil weiche Mischungen und Mischungen mit Ethylen-Propylen-Kautschuk schlecht haften. Weitere Nachteile dieser Methode werden z.B. in Werner Hofmann, Rubber Technology Handbook 1989, Carl Hanser Verlag, Kapitel 4.7.4., beschrieben.
- Oder er verwendet äußere Haftvermittler, mit denen er die Kunststoffoberfläche behandelt. Dann ist er auf ein umständliches, umweltbelastendes Verfahren angewiesen. Dieses Verfahren wird z. B. in der Zeitschrift "Kautschuk und Gummi-Kunststoffe", Oktober 1991, S. 963 bis 970 beschrieben.
- Oder er muß Spezialkautschuke mit Carboxyl- oder Anhydridgruppen verwenden, wie in der EP-A-0 344 427 beschrieben. Die Eigenschaften dieser Kautschuke unterscheiden sich von denen der Standardkautschuke. Die Spezialkautschuke sind darüber hinaus deutlich teurer als Standardkautschuk. Außerdem funktioniert diese Methode nur dann gut, wenn die verwendeten Polyamide diamingeregelt sind.

In der US-A-3 398 045 werden Polyamidfasern mit Lösungen von verschiedenen Silanen getränkt. Die so behandelten Fasern werden nach dem Trocknen mit Kautschukcompounds covulkanisiert, wobei gegenüber unbehandelten Polyamidfasern die Haftung verbessert ist.

Die WO-A-84/03240 beschreibt einen Verbundfilm aus einer Polyolefinschicht und einer Polyamidschicht. Die Polyolefinzusammensetzung enthält ein ungesättigtes Silan und ein Peroxid, wodurch eine gewisse Haftung erzielt wird.

Darüber hinaus wird in der EP-A-0 142 930 ein Verfahren zur Herstellung von Verbundgegenständen aus EPDM-Vulkanisaten und Polyamid beschrieben. Die EPDM-Zusammensetzung enthält N,N'-m-Phenylendimaleimid, womit die Haftung am Polyamid erreicht wird.

Es war nun die Aufgabe der vorliegenden Erfindung, Verbundpartner zu erarbeiten, welche die Herstellung von Verbundgegenständen aus Polyamiden und Elastomeren unter Ausbildung eines festen Verbunds erlauben, wobei folgende Gesichtspunkte erfüllt sein sollten:
- Als Polyamidkomponenten sollten Polyamide, Polyamidblends, Polyamidformmassen und Faserverbundwerkstoffe mit Polyamidmatrix verwendet werden. Eine spezielle Ausrüstung - z. B. Ersatz von Carboxylgruppen durch Aminogruppen - sollte nicht notwendig sein.
- Haftharze, die die Eigenschaften der Vulkanisate beeinträchtigen, sollten in den Kautschuk-Compounds nicht verwendet werden.
- Haftvermittler, die in einem gesonderten Arbeitsschritt zwischen Polyamid und Kautschuk aufgebracht werden müssen, sollten ebenfalls nicht verwendet werden.
- Es sollten handelsübliche Standardkautschuke verwendet werden.
- Additive für die Verbundhaftung sollten die Eigenschaften der Vulkanisate nicht wesentlich beeinträchtigen.

Es wurde nun gefunden, daß die genannten Forderungen erfüllt werden, wenn die Kautschuk-Compounds bestimmte Silane enthalten und mit Peroxiden vulkanisiert werden.

Die Verwendung von Peroxiden und von Silanen in Kautschuk-Compounds ist an sich bekannt.

Peroxide werden Schwefel oder Schwefelspendern als Vulkanisationsmittel vorgezogen, wenn man bei den Vulkanisaten eine hohe Temperaturbeständigkeit erzielen will.

Silane verwendet man in Polymeren wie Kautschuken, Duromeren und Thermoplasten, wenn man eine Anbindung von anorganischen Füllstoffen, z. B. Talkumpulver, Quarzpulver oder Glasfasern an das organische Polymere bewirken will. Die Hersteller der Füllstoffe liefern in der Regel ihre Produkte fertig mit Silanen oder anderen Schlichten ausgerüstet an die Verwender. Die Verwender mischen die so vorbehandelten Füllstoffe mit den Polymeren und erhalten so verstärkte Formmassen oder verstärkte Compounds. Bei mineralisch hochgefüllten Systemen kann es aber für den Verwender vorteilhaft sein, ungeschlichtete Füllstoffe einzusetzen und das Silan oder andere Schlichten dem Polymeren vor oder gemeinsam mit dem anorganischen Füllstoff im sogenannten "Additivverfahren" zuzumischen. So wird häufig bei der Herstellung von Kautschuk-Compounds verfahren. Diese Compounds enthalten anschließend in der Regel ca. 0,2 bis 2,5 Gew.-% an Silan, bezogen auf den Füllstoff, oder bis ca. 1,5 Gew.-%, bezogen auf das Compound (Firmenschrift "Dynasilan®" der Hüls AG, D-45764 Marl, Ausgabe 7/92, Seite 26). Ein Gehalt von 2 Gew.-% Silan im Compound, bezogen auf den Füllstoff, wird jedoch normalerweise nicht überschritten.

Vorstellungen über Bindungsmechanismen zwischen anorganischen und organischen Komponenten wurden in zahlreichen Publikationen ausgebreitet. Insbesondere sei dazu auf die Firmenschrift der Hüls AG, D-45764 Marl, mit dem Titel "Anwendungen von organofunktionellen Silanen" (Oktober 1989) verwiesen.

Die hier erfindungsgemäß eingesetzten Silane werden hingegen gezielt eingesetzt, um eine feste Bindung an der Grenzfläche Thermoplast/Vulkanisat zu erzielen. Hierzu sind größere Mengen nötig als zur bloßen Anbindung anorganischer Füll- und Verstärkungsstoffe. Daß der Zusatz derartiger Silane zur Lösung dieser Aufgabe nicht nahelag, ist schon daran ersichtlich, daß mit anderen Thermoplasten wie z. B. aromatischen Polyestern, etwa Polybutylen- oder Polyethylenterephthalat, anstelle von Polyamid kein befriedigender Verbund erhalten wird.

Über den hier wirksamen Bindungsmechanismus zwischen Polyamid und Vulkanisat liegen noch keine gesicherten Erkenntnisse vor.

Das erfindungsgemäße Verfahren zur Herstellung von Gegenständen aus mindestens zwei fest miteinander verbundenen Teilstücken aus Vulkanisaten einerseits und Polyamiden, Polyamidformmassen, Polyamidblends oder Faserverbundwerkstoffen mit Polyamidmatrix andererseits ist dadurch gekennzeichnet, daß
a) der Thermoplast bzw. die Polyamidmatrix mindestens 30 Gew.-% Polyamide enthält und
b) das Vulkanisat durch Vulkanisation eines Kautschukcompounds, das
   I. 100 Gew.-Teile eines Kautschuks,
   II. 0 bis 300 Gew.-Teile Füllstoffe,
   III. 0 bis 150 Gew.-Teile Weichmacher,
   IV. 1 bis 10 Gew.-Teile peroxidische Vulkanisationsmittel,
   V. 0 bis 4 Gew.-Teile Vulkanisationsaktivatoren und
   VI. 1 bis 10 Gew.-Teile eines Silans
   enthält, unter üblichen Vulkanisationsbedingungen im Kontakt mit dem Polyamidformkörper hergestellt wird, wobei das Silan durch die allgemeine Formel 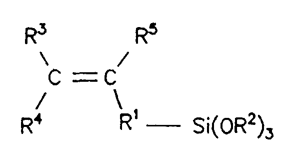
charakterisiert wird, in der R¹ ein beliebiger zweiwertiger Rest oder eine direkte Bindung sein kann, während R² unabhängig voneinander Wasserstoff, Alkyl, Cycloalkyl oder Aryl mit jeweils maximal 20 C-Atomen oder substituiertes Alkyl, Cycloalkyl oder Aryl sein kann.

R³, R⁴ und R⁵ werden, unabhängig voneinander, aus den gleichen Resten wie R² ausgewählt oder bedeuten eine Gruppe -COOR².

Für R¹ wird eine direkte Bindung, eine vorzugsweise lineare Alkylengruppe mit maximal 12 C-Atomen oder eine Carboxyalkylengruppe der Formel 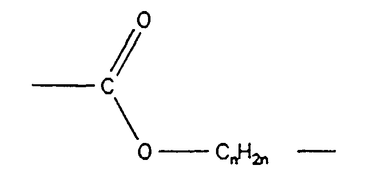 mit n gleich 1 bis 12 bevorzugt.

Für R² wird eine Alkylgruppe mit maximal 8 C-Atomen oder eine entsprechende Alkylgruppe, die durch einen Alkoxyrest mit maximal 6 C-Atomen substituiert ist, bevorzugt.

Für R³, R⁴ und R⁵ wird Wasserstoff, eine Alkylgruppe mit maximal 8 C-Atomen oder eine Arylgruppe mit maximal 10 C-Atomen bevorzugt.

Polyamide im Sinne dieser Erfindung sind hochmolekulare Verbindungen, die in ihrer Hauptkette -CO-NH-Bindungen aufweisen. Sie werden in der Regel aus Diaminen und Dicarbonsäuren oder aus Aminocarbonsäuren durch Polykondensation oder aus Lactamen durch Polymerisation gewonnen. Es kommen alle Polyamide in Frage, die durch Erhitzen geschmolzen werden können. Die Polyamide können auch weitere Bestandteile enthalten, die durch Polykondensation eingebaut werden, wie z. B. Glykole, insbesondere Polyetherglykole. Beispiele für geeignete Polyamide sind PA 46, PA 6, PA 66, PA 610, PA 612, PA 1012, PA 11, PA 12, PA 1212, PA 6,3-T und PEBA sowie Mischungen daraus. Derartige Polyamide sowie Herstellungsmethoden sind Stand der Technik.

Polyamidformmassen im Sinne dieser Erfindung sind Aufbereitungen von Polyamiden, die zur Verbesserung der Verarbeitungseigenschaften oder zur Modifizierung der Gebrauchseigenschaften vorgenommen wurden. Polyamid-formmassen enthalten z. B. Stabilisatoren, Gleitmittel, Füllstoffe wie etwa Ruß, Graphit, Metallflitter, Titandioxid und Zinksulfid, Verstärkungsmittel wie etwa Glas-, Kohle-, Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übriger Zusatzstoffe insgesamt bis zu 10 %, jeweils bezogen auf die gesamte Formmasse, betragen.

Polyamidblends im Sinne dieser Erfindung sind Formmassen, die aus Polyamiden und anderen Polymeren sowie den bei den Polyamidformmassen gebräuchlichen Additiven zusammengesetzt sind. Die Polymerbestandteile können ineinander löslich sein oder der eine Polymerbestandteil kann in dem anderen dispers verteilt sein oder beide können miteinander interpenetrierende Netzwerke bilden. Bevorzugte Polyamidblends im Sinne dieser Erfindung sind Mischungen aus Polyamiden und Polyphenylenether, in denen der Polyphenylenether dispers im Polyamid verteilt ist. Solche Formmassen werden durch Schmelzen und Vermischen von mindestens 30 Gewichtsprozent eines Polyamids mit bis zu 70 Gewichtsprozent eines Polyphenylenethers hergestellt. Formmassen auf Basis von Polyamiden und Polyphenylenethern werden z. B. in den DE-OSS 30 27 104 und 35 18 278 sowie in der EP-A-0 147 874 und der EP-A-0 024 120 beschrieben. Es ist dem Fachmann bekannt, daß diese Formmassen üblicherweise einen Verträglichkeitsvermittler enthalten. Andere bevorzugte Polyamidblends sind Mischungen aus Polyamiden mit thermoplastischen Polyestern, insbesondere Polybutylenterephthalat, wobei der thermoplastische Polyester dispers in der Polyamidphase verteilt ist oder mit dieser ein interpenetrierendes Netzwerk bildet.

Weiterhin kommen auch schlagzähmodifizierte Polyamide in Frage, z. B. Polyamide mit darin dispers verteiltem Kautschuk.

Als Faserverbundwerkstoffe mit Polyamidmatrix sollen Werkstoffe verstanden werden, die aus ungeschnittenen Verstärkungsfasern oder Geweben daraus einerseits und einer Matrix aus Polyamiden, Polyamidformmassen oder Polyamidblends andererseits zusammengesetzt sind.

Faserverbundwerkstoffe mit einer Matrix aus Polyamiden, Polyamidformmassen oder Polyamidblends können auf verschiedene Weise hergestellt werden; beispielsweise können mit Polyamiden imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyamidfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Der verwendete Kautschuk kann beispielsweise ein EP(D)M-Kautschuk, ein SB-Kautschuk (als E-SBR oder L-SBR), BR, NR, IR, IIR, CIIR, BIIR, NBR, CR, ein styrolhaltiges Blockcopolymer und/oder ein Polyalkenylen sein.

EP(D)M-Kautschuke sind Kautschuke, die in bekannter Weise durch Polymerisation eines Gemisches aus Ethylen und Propylen und gegebenenfalls eines Diens in Gegenwart eines Ziegler-Natta-Katalysators hergestellt werden.

Der EPDM-Kautschuk wird etwa durch Polymerisation eines Gemisches aus mehr als 25 % Ethylen,
mehr als 25 % Propylen und
bis 10 %, inbesondere 1 bis 3 % eines vorzugsweise nicht konjugierten Diens wie Bicyclo(2.2.1)-heptadien, Hexadien-1.4, Dicyclopentadien und insbesondere 5-Ethylidennorbornen hergestellt.

Beim SB-Kautschuk kann es sich sowohl um E- als auch um L-SBR mit einem Styrolanteil bis maximal etwa 40 Gewichtsprozent handeln.

E-SBR wird in bekannter Weise durch Polymerisation in Emulsion hergestellt, während L-SBR durch Polymerisation in Lösung hergestellt wird.

Butadienkautschuk (BR) kann in bekannter Weise beispielsweise durch Polymerisation mit Hilfe von Li- oder Co-Katalysatoren hergestellt werden. Die Verknüpfungsart hat hierbei keinen Einfluß auf die Eignung.

Naturkautschuk (NR) wird üblicherweise in der cis-1,4-Konfiguration verwendet. Jedoch ist im Rahmen dieser Erfindung auch die trans-1,4-Konfiguration geeignet.

Isoprenkautschuk (IR) kann unabhängig davon verwendet werden, ob er z. B. mit Ti- oder Li-Katalysatoren hergestellt wurde. Der cis-1,4/trans-1,4-bzw. 1,2- und 3,4-Gehalt hat keinen Einfluß auf die Haftungseigenschaften.

Isobuten-Isopren-Kautschuk (IIR) kann als solcher oder in halogenierter Form (CIIR bzw. BIIR) verwendet werden.

Nitrilkautschuk (NBR) wird durch Copolymerisation von Butadien und Acrylnitril in Masseverhältnissen von ca. 51 : 48 bis 82 : 18 gewonnen. Seine Herstellung erfolgt praktisch ausschließlich in wäßriger Emulsion. Die dabei resultierenden Emulsionen werden für den Einsatz im Rahmen dieser Erfindung zum Festkautschuk aufgearbeitet.

Chloroprenkautschuk (CR) wird üblicherweise durch radikalische Emulsionspolymerisation hergestellt. Dabei wird das Monomere in unterschiedlichen Strukturen in das Polymer eingebaut. Der cis-1,4/trans-1,4- bzw. 1,2- und 3,4-Gehalt bzw. der Anteil an Kopf/Kopf- und Kopf/Schwanz-Verknüpfung hat keinen Einfluß auf die Haftungseigenschaften.

Als styrolhaltiges Blockcopolymer können alle bekannten Typen auf Basis von Styrol/Butadien oder Styrol/Isopren verwendet werden. Beispiele hierfür sind SB, SBS und SIS sowie entsprechende Typen, die eine größere Anzahl von Blöcken enthalten. Die Copolymeren können hierbei linear oder verzweigt sein. Darüber hinaus kann die Weichphase hydriert sein; entsprechende Blockcopolymere werden auch als Styrol-Ethylen-Butylen-Styrol-Blockcopolymere (SEBS) bezeichnet.

Polyalkenylene werden durch ringöffnende bzw. ringerweiternde Polymerisation von Cycloalkenen dargestellt [siehe K. J. Ivin, T. Saegusa, "Ring-opening Polymerisation", Vol. 1, Elsevier Appl. Sci. Publishers, London, insbesondere Seiten 121 bis 183 (1984)]. Hiervon werden Polyoctenylene bevorzugt (vgl. A. Dräxler, Kautschuk + Gummi, Kunststoff 1981, Seiten 185 bis 190). Polyoctenylene mit unterschiedlichen Anteilen an cis- und trans-Doppelbindungen sowie unterschiedlichen Molekulargewichten sind nach literaturbekannten Methoden erhältlich.

Im Rahmen dieser Erfindung wird bevorzugt ein Kautschuk verwendet, der aus 30 bis 100 Gew.-Teilen eines EP(D)M-Kautschuks und 70 bis 0 Gew.-Teilen anderer Kautschuke besteht.

Als Füllstoffe eignen sich alle Stoffe, die üblicherweise in Kautschuken eingesetzt werden, wie z. B. Ruß, Kieselsäure, Silikate, Calciumcarbonat, Zinkoxid und Talkum. Bei Verwendung hochaktiver Füllstoffe wird zum Erreichen einer Verbundhaftung eine erhöhte Silanmenge benötigt.

Geeignete Weichmacher sind insbesondere naphthenische und/oder aliphatische Öle oder spezielle, in der Kautschuktechnologie übliche Weichmacher wie z. B. Polyalkoholfettsäureester oder Thioether in einer Menge von vorzugsweise bis zu 50 Gewichtsteilen, bezogen auf 100 Gewichtsteile Kautschuk.

Geeignete peroxidische Vulkanisationsmittel sind die dem Fachmann bekannten Peroxide wie z. B. 2,5-Dimethyl-2,5-bis(tert.-butylperoxy)-hexan, Dicumylperoxid, 4,4-Di-tert.-butylperoxy-n-butylvalerat, 1,1-Di-tert.-butylperoxy-3,3,5-trimethyl-cyclohexan und Bis(tert.-butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationsaktivatoren eignen sich beispielsweise Triallylcyanurat (TAC) und Acrylate wie Ethylenglykoldimethacrylat (EDMA), Butandiol-dimethacrylat (BDMA) und Trimethylolpropantrimethacrylat (TRIM). Bevorzugt werden TAC, BDMA und/oder EDMA.

Geeignete Silane sind beispielsweise vom Typ Vinyltrimethoxy- und -triethoxysilan, Vinyl-tris(2-methoxy-ethoxy)silan, 3-Methacryloxypropyl-trimethoxy- und triethoxysilan. Bevorzugt wird hierbei mit 3-Methacryloxypropyl-trimethoxysilan gearbeitet. Die Silane werden, bezogen auf 100 Gew.-Teile Kautschuk, vorzugsweise zu 2 bis 6 Gew.-Teilen eingesetzt.

Die Kautschuk-Compounds können darüber hinaus weitere Zusätze enthalten, wie z. B. Vulkanisationsverzögerer, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 50 Gew.-Teile aus. Die Herstellung solcher Compounds wird beispielsweise von F.W. Barrow in "Rubber Compounding", erschienen 1988 bei Marcel Dekker Inc., New York und Basel, beschrieben.

Die Gegenstände aus den Polyamiden, Polyamidformmassen oder Polyamidblends einerseits und Kautschuk-Compounds andererseits können einstufig oder zweistufig hergestellt werden. Gegenstände aus Faserverbundwerkstoffen und Kautschuk-Compounds werden zweistufig hergestellt.

Beim zweistufigen Prozeß wird zunächst das steife Formteil durch Spritzgießen, Extrudieren oder Konsolidieren von Prepregs hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Die optimalen Vulkanisationsbedingungen hängen von der gewählten Kautschukmischung, insbesondere ihrem Vulkanisationssystem, und der Formteilgestaltung ab. Dabei kann man sich auf die bekannten Erfahrungswerte stützen, denn das Additiv Silan beeinflußt die Reaktionsbedingungen nicht.

Geeignete Massetemperaturen der Kautschukmischung im Zylinder liegen im allgemeinen im Bereich von 40 bis 80 °C, vorzugsweise von 60 bis 70 °C.

Geeignete Werkzeugtemperaturen richten sich nach den Erweichungstemperaturen der Einlegeteile. Sie liegen im allgemeinen im Bereich von 140 bis 200 °C. Wenn die Erweichungsbereiche der Einlegeteile es zulassen, wählt man Temperaturen im oberen Bereich, z. B. zwischen 170 und 190 °C. Die Vulkanisationszeiten richten sich außer nach der Kautschukmischung nach den Vulkanisationstemperaturen und nach der Geometrie der Teile. Sie liegen im allgemeinen zwischen 30 s und 30 min; niedrigere Temperaturen und dickere Kautschukteile erfordern längere Zeiten.

Beim Beaufschlagen und Ausvulkanisieren nach dem zweistufigen Extrusionsverfahren wird z. B. ein in der ersten Stufe hergestelltes Profil aus einer Polyamidformmasse, z. B. ein Rohr, mit der Kautschukmasse ummantelt und gegebenenfalls unter Druck ausvulkanisiert. Entsprechend verfährt man mit Platten aus Polyamidformmassen oder aus Faserverbundwerkstoffen mit Polyamidmatrix.

Beim einstufigen Spritzgießverfahren arbeitet man analog zu dem einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des Polyamids, der Polyamidformmasse bzw. des Polyamidblends liegen sollte.

Anwendungszwecke für die erfindungsgemäßen Bauteile aus den Polyamiden, Polyamidformmassen, Polyamidblends und Faserverbundwerkstoffen mit Polyamidmatrix einerseits und den genannten Kautschuk-Compounds andererseits sind z. B. Dichtungen, Gehäuse für Motoren, Pumpen und elektrisch betriebene Werkzeuge, Walzen, Reifen, Kupplungen, Anschlagpuffer, Transportbänder, schall- und schwingungsdämpfende Bauteile.

### Experimenteller Teil

Für die Herstellung der Kautschukmischung wurden folgende Materialien verwendet:
BUNA® HÜLS AP 341, ein statistischer EPDM-Kautschuk (Hüls AG, 45764 Marl) mit einer Mooney-Viskosität von ML (1 + 4) 100 °C = 70.
- Durex® 0:: Ruß der Fa. Degussa mit einem CTAB-Wert von 20 m²/g.
- Omyalite®:: Calciumcarbonat der Fa. Omya, Köln, mit einer spez. Oberfläche von ca. 7,5 m²/g.
- Sillitin® Z86:: Aluminium-Silikat der Fa. Hoffmann Mineral, Neuburg, Donau mit einer spez. Oberfläche von ungefähr 14 m²/g.
- ZnO RS:: Zinkoxid der Fa. Carl Arnsberger, Köln
- Vulkanox® HS:: polymerisiertes 2,2,4-Trimethyl-1,2-dihydrochinolin der Fa. Rhein-Chemie, Rheinau
- BDMA:: Butandioldimethacrylat, 75 % auf Ca-Silikat der Fa. Lehmann & Voss
- Perkadox® 14/40:: Bis-tert.-butylperoxy-isopropylbenzol, 40%ig auf Kreide und SiO₂ der Fa. Akzo Chemicals, Düren
- DYNASILAN® MEMO:: Methacryl-oxpropyl-trimethoxysilan der Fa. Hüls, Troisdorf
- DYNASILAN® AMEO:: Aminopropyltriethoxysilan der Fa. Hüls, Troisdorf
- DYNASILAN® VTMOEO:: Vinyl-tri(methoxy-ethoxy)silan der Fa. Hüls, Troisdorf
- DYNASILAN® GLYMO:: Glycidyl-oxypropyltrimethoxysilan der Fa. Hüls, Troisdorf
- DYNASILAN® DAMO:: N-Aminoethyl-3-aminopropyl-trimethoxysilan der Fa. Hüls, Troisdorf
- Sunpar® 2280:: paraffinisch (73 %)-naphthenisches (23 %)-aromatisches (4 %) Öl der Fa. Sun Oil, Belgien

Als Polyamidmaterialien wurden folgende Formmassen eingesetzt:
Typ A entspricht einem Polyetherblockamid (PEBA) auf Polyamid 12-Basis, VESTAMID® E 55 der Fa. Hüls AG, D-45764 Marl mit einer Shore D-Härte von 55.
Typ B entspricht einem Polyamid 12, VESTAMID® L der Fa. Hüls AG, D-45764 Marl mit einer Lösungsviskosität (ηᵣₑₗ) von 2,1 in einer 0,5 %igen Lösung in m-Kresol und einem Carboxyl- zu Aminoendgruppenverhältnis von ca. 3,5.
Typ C entspricht einem Polyamid 12, VESTAMID® L der Fa. Hüls AG, D-45764 Marl mit einer Lösungsviskosität (ηᵣₑₗ) von 2,1 in einer 0,5 %igen Lösung in m-Kresol und einem Carboxyl- zu Aminoendgruppenverhältnis von ca. 0,3.
Typ D entspricht einem Polyamid 12, VESTAMID® L der Fa. Hüls AG, 0-45764 Marl mit einer Lösungsviskosität (ηᵣₑₗ) von 2,1 in einer 0,5 %igen Lösung in m-Kresol und einem Carboxyl- zu Aminoendgruppenverhältnis von ca. 0,3. Die Formmasse enthält zusätzlich 7,5 Gewichts-% N-Butylbenzolsulfonamid als Weichmacher.
Typ E entspricht einem Polyamid 612, VESTAMID® D der Fa. Hüls AG, D-45764 Marl mit einer Lösungsviskosität (ηᵣₑₗ) von 1,8 in einer 0,5 %igen Lösung in m-Kresol und einem Carboxyl- zu Aminoendgruppenverhältnis von ca. 3.
Typ F entspricht einem Polyamid 612, VESTAMID® D der Fa. Hüls AG, D-45764 Marl mit einer Lösungsviskosität (ηᵣₑₗ) von 1,8 in einer 0,5 %igen Lösung in m-Kresol und einem Carboxyl- zu Aminoendgruppenverhältnis von ca. 0,4.
Typ G entspricht einem Polyamid 6, Ultramid® B4 der Fa. BASF AG, Ludwigshafen.
Typ H entspricht einem Polyamid 6,3-T, Trogamid® 15000 der Fa. Hüls AG, D-45764 Marl.

### Herstellung der Kautschukmischungen

Die Herstellung der einzelnen Kautschukmischungen I.1 bis V.4 erfolgte in einem Batch-Labor-Meßkneter (Fa. Haake). Bei einer Starttemperatur von 60 °C und einer Drehzahl von 64 Upm wurde zunächst 28,57 g BUNA® ÜLS AP 341 plastifiziert. Innerhalb von etwa fünf Minuten wurden 5,71 g Sunpar® 2280, der in der Tabelle 1 angegebene Füllstoff, 1,43 g ZnO RS und 0,57 g Vulkano® HS eingearbeitet und weitere drei Minuten homogenisiert. Während dieser Zeit stieg die Temperatur auf ca. 110 °C an. Diese Vormischung wurde anschließen ≥ 24 h bei Raumtemperatur gelagert. Anschließend wurden bei gleichen Bedingungen (60 °C Starttemperatur, 64 Upm) 1,71 g Perkadox® 14/40, 0,43 g BDMA sowie das in der Tabelle 1 angegebene Silan innerhalb von ca. vier Minuten homogen eingearbeitet. Dabei stieg die Temperatur der Mischung nicht über 130 °C an.

**Tabelle 1**

| Zusammensetzung der Kautschukmischungen | | | | | | | | |
|---|---|---|---|---|---|---|---|---|
| Mischung | Füllstoff | | | DYNASILAN-Typ | | | | |
| | Sillitin Z86 [g] | Omyalite [g] | Durex O [g] | MEMO [g] | GLYMO [g] | AMEO [g] | DAMO [g] | VTMEO [g] |
| I.1 | 22,86 | - | - | - | - | - | - | - |
| I.2 | 22,86 | - | - | 0,29 | - | - | - | - |
| I.3 | 22,86 | - | - | 0,57 | - | - | - | - |
| I.4 | 22,86 | - | - | 1,14 | - | - | - | - |
| I.5 | 22,86 | - | - | - | 1,14 | - | - | - |
| I.6 | 22,86 | - | - | - | - | 1,14 | - | - |
| I.7 | 22,86 | - | - | - | - | - | 1,14 | - |
| I.8 | 22,86 | - | - | - | - | - | - | 1,14 |
| II.1 | 5,71 | - | - | - | - | - | - | - |
| II.2 | 5,71 | - | - | 0,29 | - | - | - | - |
| II.3 | 5,71 | - | - | 0,57 | - | - | - | - |
| II.4 | 5,71 | - | - | 1,14 | - | - | - | - |
| III.1 | - | 22,86 | - | - | - | - | - | - |
| III.2 | - | 22,86 | - | 0,29 | - | - | - | - |
| III.3 | - | 22,86 | - | 0,57 | - | - | - | - |
| III.4 | - | 22,86 | - | 1,14 | - | - | - | - |
| III.5 | - | 22,86 | - | - | 1,14 | - | - | - |
| III.6 | - | 22,86 | - | - | - | 1,14 | - | - |
| III.7 | - | 22,86 | - | - | - | - | 1,14 | - |
| III.8 | - | 22,86 | - | - | - | - | - | 1,14 |
| IV.1 | - | 5,71 | - | - | - | - | - | - |
| IV.2 | - | 5,71 | - | 0,29 | - | - | - | - |
| IV.3 | - | 5,71 | - | 0,57 | - | - | - | - |
| IV.4 | - | 5,71 | - | 1,14 | - | - | - | - |
| V.1 | - | - | 22,86 | - | - | - | - | - |
| V.2 | - | - | 22,86 | 0,29 | - | - | - | - |
| V.3 | - | - | 22,86 | 0,57 | - | - | - | - |
| V.4 | - | - | 22,86 | 1,14 | - | - | - | - |

### Herstellung der Verbunde

Von den untersuchten Polyamiden wurden Prüfkörper (100 x 100 x 4 mm) im Spritzgießverfahren bei einer Zylindertemperatur von 250 °C hergestellt. Anschließend wurde eine Platte in eine Form aus V2A-Stahl (100 x 100 x 8 mm) gelegt und mit einem 20 mm breiten Stück PTFE-Folie an einer Seite abgedeckt. Die Gesamtfläche wurde mit der zu prüfenden Kautschukmischung bedeckt. Die so präparierte Platte wurde in einer hydraulischen Presse (Schwabenthan - Polystat 200T) je nach verwendetem Formmassentyp unter folgenden Konditionen verpreßt:
a) 40 Minuten bei 160 °C und 200 bar (Formmassentyp A, H)
b) 20 Minuten bei 180 °C und 200 bar (Formmassentyp B, C, D)
c) 10 Minuten bei 200 °C und 200 bar (Formmassentyp E, F, G)

### Prüfung der Verbundhaftung

Die Prüfung der Verbundhaftung zwischen Polyamidmaterial und vulkanisiertem Kautschuk wurde mittels eines Schälversuches in Anlehnung an DIN 53 531 durchgeführt. Dabei wurde das Gummiteil, das durch die Teflonfolie bei der Vulkanisation vom Polyamidmaterial getrennt gehalten wurde, so eingespannt, daß bei den Schälversuchen der Gummi Gummistreifen senkrecht zu der Thermoplastfläche abgezogen wurde. Die Ergebnisse sind in der Tabelle 2 wiedergegeben, wobei die Beurteilung folgendermaßen vorgenommen wurde:
- H: Haftung (Bruch im Kautschuk, d. h. kohäsiver Bruch; hohe Trennkraft)
- -: Nicht-Haftung (Bruch in der Grenzfläche zwischen Gummi und Polyamid, d. h. adhäsiver Bruch; geringe bis sehr geringe Trennkraft)
- t: teilweise Haftung (Grenzbereich zwischen kohäsivem und adhäsivem Bruch; mittlere Trennkraft)

**Tabelle 2**

| Prüfung der Verbundhaftung | | | | | | | | | |
|---|---|---|---|---|---|---|---|---|---|
| Beispiel (B) bzw. Vergleichsbeispiel (V) | Kautschukmischung | Formmasse | | | | | | | |
| | | A | B | C | D | E | F | G | H |
| V1 | I.1 | - | - | - | - | - | - | - | - |
| B1 | 1.2 | - | - | - | - | - | H | - | - |
| B2 | 1.3 | - | - | H | H | - | H | t | - |
| B3 | 1.4 | H | H | H | H | H | H | H | H |
| V2 | 1.5 | - | - | - | - | - | - | - | - |
| V3 | 1.6 | - | - | - | - | - | - | - | - |
| V4 | 1.7 | - | - | - | - | - | - | - | - |
| B4 | 1.8 | - | H | t | H | t | H | t | - |
| V5 | II.1 | - | - | - | - | - | - | - | - |
| B5 | II.2 | - | - | - | - | - | - | - | - |
| B6 | II.3 | - | - | H | H | H | H | H | H |
| B7 | II.4 | H | H | H | H | H | H | H | H |
| V6 | III.1 | - | - | - | - | - | - | - | - |
| B8 | III.2 | - | - | - | - | - | H | - | - |
| B9 | III.3 | - | - | H | H | - | H | - | H |
| B10 | III.4 | H | H | H | H | H | H | H | H |
| V7 | III.5 | - | - | - | - | - | - | - | - |
| V8 | III.6 | - | - | - | - | - | - | - | - |
| V9 | III.7 | - | - | - | - | - | - | - | - |
| B11 | III.8 | - | H | t | H | t | H | t | t |
| V10 | IV.1 | - | - | - | - | - | - | - | - |
| B12 | IV.2 | - | - | - | - | - | - | - | - |
| B13 | IV.3 | - | H | H | H | H | H | - | H |
| B14 | IV.4 | H | H | H | H | H | H | H | H |
| V11 | V.1 | - | - | - | - | - | - | - | - |
| B15 | V.2 | - | H | H | H | H | H | H | H |
| B16 | V.3 | H | H | H | H | H | H | H | H |
| B17 | V.4 | H | H | H | H | H | H | H | H |

Anhand der Vergleichsbeispiele V1, V5, V6, V10 und V11 wird deutlich, daß ohne Zusatz von Silan kein fester Verbund erhalten werden kann.

Die Vergleichsbeispiele V2 bis V4 sowie V7 bis V9 zeigen, daß Silane, die nicht die erfindungsgemäß benötigte Doppelbindung, sondern eine andere funktionelle Gruppe aufweisen, zur Herstellung eines festen Verbunds ungeeignet sind.

Die Beispiele B1, B5, B8, B12 und B15 zeigen, daß im Bereich der Untergrenze des Silangehalts wegen der silanverbrauchenden Wirkung des Füllstoffs häufig kein ausreichender Verbund erhalten wird, daß aber bei Anwesenheit von Durex® O gute Ergebnisse erhalten werden.

Der Einfluß des Silangehalts bei sonst gleicher Zusammensetzung des Kautschukcompounds wird z. B. in der Reihe V1, B1, B2, B3 deutlich.

Daß der erfindungsgemäße Effekt auf die Verwendung einer Thermoplastkomponente auf Basis von Polyamid beschränkt ist, wird durch das Vergleichsbeispiel V12 dokumentiert.

### Vergleichsbeispiel V12

Als Thermoplastkomponente wird ein Polybutylenterephthalat der Handelsbezeichnung VESTODUR® 1000 (Fa. Hüls AG, D-45764 Marl) eingesetzt.

Als Kautschukcompound wird die Kautschukmischung V.4 verwendet.

Aus diesen Komponenten wird wie bei den vorhergehenden Beispielen und Vergleichsbeispielen ein Verbund hergestellt (Preßbedingungen 20 Minuten bei 180 °C und 200 bar). Die Prüfung führt zu einem adhäsiven Bruch mit nur sehr geringer Trennkraft.

## Patentansprüche

1. Verfahren zur Herstellung von Gegenständen aus mindestens zwei fest miteinander verbundenen Teilstücken aus einem Vulkanisat einerseits und einem Thermoplast oder Faserverbundwerkstoff mit Polyamidmatrix andererseits,
wobei der Thermoplast ein Polyamid, eine Polyamidformmasse oder ein Polyamidblend ist,
dadurch gekennzeichnet, daß
a) der Thermoplast bzw. die Polyamidmatrix mindestens 30 Gew.-% Polyamid enthält und
b) das Vulkanisat unter üblichen Vulkanisationsbedingungen im Kontakt mit dem Polyamidformkörper durch Vulkanisation eines Kautschukcompounds hergestellt wird, das folgende Komponenten enthält:
I. 100 Gew.-Teile eines Kautschukes, der keine Carboxyl- oder Anhydridgruppen enthält,
II. 0 bis 200 Gew.-Teile Füllstoffe,
III. 0 bis 100 Gew.-Teile Weichmacher,
IV. 1 bis 5 Gew.-Teile peroxidische Vulkanisationsmittel,
V. 0 bis 4 Gew.-Teile Vulkanisationsaktivatoren und
VI. 1 bis 10 Gew.-Teile eines Silans der Formel 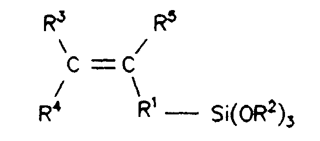
wobei
R¹ ein beliebiger zweiwertiger Rest oder eine direkte Bindung ist, während
R² Wasserstoff, Alkyl, Cycloalkyl oder Aryl, jeweils ggf. substituiert, mit jeweils maximal 20 C-Atomen bedeutet; und
R³, R⁴ und R⁵ unabhängig voneinander die gleiche Bedeutung wie R² haben oder eine Gruppe -COOR² bedeuten.

2. Verfahren gemäß Anspruch 1,
dadurch gekennzeichnet,
daß 2 bis 6 Gew.-Teile des Silans, bezogen auf 100 Gew.-Teile Kautschuk, eingesetzt werden.

3. Verfahren gemäß einem der vorhergehenden Ansprüche,
dadurch gekennzeichnet,
daß das Silan vom Typ Vinyltrimethoxysilan, Vinyl-tris(2-methoxyethoxy)silan oder 3-Methacryloxypropyl-trimethoxysilan ist.

4. Verfahren gemäß einem der vorhergehenden Ansprüche,
dadurch gekennzeichnet,
daß der Kautschuk ein EP(D)M-Kautschuk, E-SBR, L-SBR, BR, NR, IR, IIR, CIIR, BIIR, NBR, CR, ein styrolhaltiges Blockcopolymer und/oder ein Polyalkenylen ist.

5. Verfahren gemäß einem der vorhergehenden Ansprüche,
dadurch gekennzeichnet,
daß der Kautschuk aus 30 bis 100 Gew.-Teilen eines EP(D)M-Kautschuks und 70 bis 0 Gew.-Teilen anderer Kautschuke besteht.

6. Verfahren gemäß einem der vorhergehenden Ansprüche,
dadurch gekennzeichnet,
daß das Kautschukcompound darüber hinaus Vulkanisationsverzögerer, Alterungsschutzmittel, Verarbeitungshilfsmittel, Entformungsmittel und/oder Treibmittel enthält.

7. Verfahren gemäß einem der vorhergehenden Ansprüche,
dadurch gekennzeichnet,
daß der Verbund im einstufigen oder im zweistufigen Prozeß hergestellt wird, wobei die Massetemperatur der Kautschukmischung im Zylinder im Bereich von 40 bis 80 °C und die Werkzeugtemperatur im Bereich von 140 bis 200 °C liegen.

8. Verbundgegenstände, hergestellt nach einem der vorhergehenden Ansprüche.

## Claims

1. A process for the production of articles of at least two component pieces, firmly bonded to one another, comprising a vulcanizate on the one hand and a thermoplastic or a fibre composite material with a polyamide matrix on the other hand, the thermoplastic being a polyamide, a polyamide moulding composition or a polyamide blend, characterized in that
a) the thermoplastic or the polyamide matrix comprises at least 30% by weight of polyamide and
b) the vulcanizate is prepared under customary vulcanization conditions in contact with the polyamide shaped article by vulcanization of a rubber compound which comprises the following components:
I. 100 parts by weight of a rubber which comprises no carboxyl or anhydride groups,
II. from 0 to 200 parts by weight of fillers,
III. from 0 to 100 parts by weight of plasticizers,
IV. from 1 to 5 parts by weight of peroxidic vulcanizing agents,
V. from 0 to 4 parts by weight of vulcanization activators and
VI. from 1 to 10 parts by weight of a silane of the formula 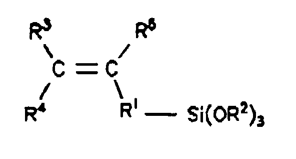
wherein
R¹ is any desired divalent radical or a direct bond, while
R² denotes hydrogen, alkyl, cycloalkyl or aryl, in each case optionally substituted and having in each case not more than 20 C atoms; and
R³, R⁴ and R⁵ independently of one another have the same meaning as R² or denote a group -COOR².

2. A process according to claim 1, characterized in that from 2 to 6 parts by weight of the silane per 100 parts by weight of rubber are employed.

3. A process according to any one of the preceding claims, characterized in that the silane is of the vinyltrimethoxysilane, vinyl-tris(2-methoxyethoxy)silane or 3-methacryloxypropyl-trimethoxysilane type.

4. A process according to any one of the preceding claims, characterized in that the rubber is an EP(D)M rubber, E-SBR, S-SBR, BR, NR, IR, IIR, CIIR, BIIR, NBR, CR, a styrene-containing block copolymer and/or a polyalkenylene.

5. A process according to any one of the preceding claims, characterized in that the rubber comprises from 30 to 100 parts by weight of an EP(D)M rubber and from 70 to 0 parts by weight of other rubbers.

6. A process according to any one of the preceding claims, characterized in that the rubber compound furthermore comprises a vulcanization retardant, an anti-ageing agent, a processing auxiliary, a mould release agent and/or a blowing agent.

7. A process according to any one of the preceding claims, characterized in that the composite is prepared in a one-stage procedure or in a two-stage procedure, the material temperature of the rubber mixture in the cylinder being in the range from 40 to 80°C and the mould temperature being in the range from 140 to 200°C.

8. A composite article produced according to any one of the preceding claims.

## Revendications

1. Procédé de fabrication d'articles constitués d'au moins deux pièces étroitement reliées entre elles et faites d'un produit de vulcanisation d'une part et d'une matière thermoplastique ou d'un matériau composite fibreux à matrice de polyamide d'autre part,
dans lequel la matière thermoplastique est un polyamide, une masse à mouler en polyamide ou un mélange de polyamide, caractérisé en ce que
a) La matière thermoplastique ou selon les cas la matrice de polyamide contient au moins 30 % en poids de polyamide, et
b) On fabrique le produit de vulcanisation dans les conditions habituelles de vulcanisation en contact avec l'article à mouler en polyamide par vulcanisation d'une combinaison de caoutchouc, qui contient les composants suivants :
I. 100 parties en poids d'un caoutchouc qui ne contient pas de groupes carboxyle ou anhydride,
II. 0 à 200 parties en poids de charge,
III. 0 à 100 parties en poids de plastifiant,
IV. 1 à 5 parties en poids d'un agent de vulcanisation peroxydique
V. 0 à 4 parties en poids d'activateurs de vulcanisation, et
VI. 1 à 10 parties en poids d'un silane de formule : 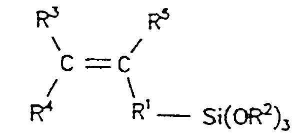
dans laquelle :
R¹ représente un radical bivalent quelconque ou une liaison directe, tandis que
R² représente un hydrogène, un alkyle, un cycloalkyle ou un aryle, à chaque fois éventuellement substitué, avec à chaque fois au maximum 20 atomes de carbone ; et
R³, R⁴ et R⁵ ont indépendamment l'un de l'autre la même signification que R² ou représentent un groupe -COOR².

2. Procédé selon la revendication 1,
caractérisé en ce qu'
on utilise de 2 à 6 parties en poids de silane, par rapport à 100 parties en poids de caoutchouc.

3. Procédé selon l'une des revendications précédentes,
caractérisé en ce que
le silane est du type vinyltriméthoxy silane, vinyl-tris(2-méthoxy-éthoxy)silane ou 3-méthacryloxypropyl-triméthoxy silane.

4. Procédé selon l'une des revendications précédentes,
caractérisé en ce que
le caoutchouc est un caoutchouc EP(D)M, E-SBR, L-SBR, BR, NR, IR, IIR, CIIR, BIIR, NBR, CR, un copolymère séquencé contenant du styrène et/ou un polyalcénylène.

5. Procédé selon l'une des revendications précédentes,
caractérisé en ce que
le caoutchouc se compose de 30 à 100 parties en poids d'un caoutchouc EP(D)M et de 70 à 0 parties en poids d'autres caoutchoucs.

6. Procédé selon l'une des revendications précédentes,
caractérisé en ce que
la combinaison de caoutchouc contient en outre des ralentisseurs de vulcanisation, des agents de protection contre le vieillissement, des adjuvants de traitement, des agents de démoulage et/ou des diluants.

7. Procédé selon l'une des revendications précédentes,
caractérisé en ce qu'
on fabrique le composite dans un procédé en une ou deux étapes, dans lequel la température massique du mélange de caoutchouc dans le cylindre se situe dans un intervalle de 40 à 80°C et la température de l'outil se situe dans un intervalle de 140 à 200°C.

8. Articles composites fabriqués selon l'une des revendications précédentes.
